## Europäisches Patentamt
## European Patent Office
## Office européen des brevets

(19)

(11) Veröffentlichungsnummer: **0 164 531**
**B1**

(12) **EUROPÄISCHE PATENTSCHRIFT**

(45) Veröffentlichungstag der Patentschrift: **08.08.90**

(21) Anmeldenummer: **85104725.8**

(22) Anmeldetag: **18.04.85**

(51) Int. Cl.⁵: **G 02 B 6/38**

(54) Lichtwellenleiter-Steckverbindung.

(30) Priorität: **18.04.84 DE 3414735**

(43) Veröffentlichungstag der Anmeldung:
**18.12.85 Patentblatt 85/51**

(45) Bekanntmachung des Hinweises auf die
Patenterteilung:
**08.08.90 Patentblatt 90/32**

(84) Benannte Vertragsstaaten:
**AT BE CH DE FR GB IT LI NL SE**

(56) Entgegenhaltungen:
**EP-A- 65 093**
**EP-A-0 051 507**
**DE-A-2 922 705**
**FR-A-2 420 147**
**JP-A-5 565 915**
**US-A-4 279 469**

(73) Patentinhaber: **Siemens Aktiengesellschaft**
**Wittelsbacherplatz 2**
**D-8000 München 2 (DE)**

(72) Erfinder: **Krausse, Peter, Dipl.-Ing.**
**Flurstrasse 1**
**D-8011 Aschheim (DE)**

EP 0 164 531 B1

Courier Press, Leamington Spa, England.

**Beschreibung**

Die Erfindung bezieht sich auf eine Lichtwellenleitersteckverbindung mit einem Stecker, bei dem das Ende der Lichtwellenleiter-Faser jeweils in einer Kapillare eines Metallsteckerstiftes fixiert ist, dessen Frontseite plan mit der Lichtwellenleiter-Faser endet, wobei eine sowohl für den Einbau z.B. in eine Gestell- oder Einschubwand als auch als Direktverbindung verwendbare Schutz- und Befestigungshülse vorgesehen ist, die eine Führungsbuchse aufweist, deren genau bearbeitete Innenflächen dem Außendurchmesser der von beiden Seiten in die Hülse einsteckbaren Stecker entspricht und die am Außenumfang beiderseits mit einem Gewinde zur Befestigung der mit Überwurfmuttern versehenen Stecker ausgestattet ist.

Eine Lichtwellenleitersteckverbindung dieser Art ist aus der DE-OS 29 22 705 bekannt. Dabei sind die Stecker durch Überwurfmuttern an einer Befestigungshülse gehalten, die ihrerseits im Mittelteil einen vergrößerten Durchmesserbereich aufweist. Auf der Außenseite dieses vergrößerten Durchmesserbereiches ist ein weiteres Gewinde angebracht, auf welches eine Ringmutter zur Befestigung der Steckverbindung an einer Wand oder dergleichen aufschraubbar ist. Einführungshilfen für die Einbringung der Steckerstifte in die Schutzhülse sind nicht vorgesehen.

Eine ähnliche Ausführungsform einer Steckverbindung für Lichtwellenleiter ist aus der DE-OS 28 26 717 bekannt. Dieser liegt jedoch ein gänzlich anderer Aufbau des Steckers zugrunde, da dort die Lichtwellenleiter-Fasern jeweils in die V-Nuten zweier parallel unter gegenseitiger Anlage verlaufender zylindrischer Stäbe eingeklebt sind. Zwar ist dort eine Hülse bekannt, in der die Enden zweier so gebildeter "Stecker" aufeinander ausgerichtet zusammenstoßen und durch sie verklemmt werden sollen. Das so gebildete Klemmstück ist gemäß einem Ausführungsbeispiel im Durchbruch einer Wand angeordnet. Es liegt in zwei achsial geteilten Flanschstücken, die durch eine Überwurfmutter unter Verspannung des Klemmstückes aus Kunststoff und damit der Lichtwellenleiter-Enden zusammengehalten werden. Zusätzlich sind die beiden Lichtwellenleiter-Enden jeweils in einer axial durch eine Feder vorspannbaren Halterung gelagert, die als Überwurfmutter gestaltet auf das jeweilige Ende der Schutzhülse aufschraubbar sind. Jedoch schließt die Verwendung des Klemmstücks eine bloße Steckbarkeit und damit universelle Verwendbarkeit aus. Im Gegensatz zum Anbringen von einfachen Handsteckern an Wanddurchführungen treten nämlich zusätzliche Probleme auf, wenn z.B. ein Einschubträger auf eine Gestellwand oder dergleichen aufgesteckt werden soll und damit die Anwendung eines Klemmstückes schon wegen Unzugänglichkeit der Verschraubung ausgeschlossen ist.

Derartige, für den Gestelleinbau geeignete Steckverbindungen sind z.B. in der japanischen Offenlegungsschrift 55-65915 beschrieben. Dabei ist ein Steckerstift vorgesehen, der außen mit einer Schutzhülse versehen ist. Ihm gegenüber liegt eine Steckbuchse, welche eine durchgehende innere Führungsbuchse aufweist (die zur Aufnahme des Steckerstiftes dient), während außen die Schutz- und Befestigungshülse zweiteilig derart ausgebildet ist, daß sie mit flanschartigen Ansätzen aneinanderstößt und durch axial eingedrehte Verbindungsschrauben zusammengehalten wird. Mittels dieses Flansches erfolgt dann auch die Befestigung an einer Gestellwand. Einer der beiden flanschartigen Teile ist mit einer zusätzlichen Außenhülse versehen, die als Zentrierbuchse dient. Dabei ist dieser der Einführung des Steckerstiftes dienende Teil insgesamt so aufgebaut, daß innen zunächst die Führungsbuchse für den Steckerstift frei und ungeschützt herausragt und dann koaxial von einer Außenhülse im flanschartigen Teil umgeben wird, die ihrerseits von einer äußeren Zentrierhülse umfaßt wird. Dieses gesamte Teil ist jedoch einteilig ausgebildet und deshalb sehr schwierig herzustellen. Darüber hinaus ergibt sich bei der bekannten Anordnung stets eine relativ starke Beanspruchung der Führungsbuchse für die Steckerstifte, weil diese selbst durch die beiden in ihrer Mitte sich treffenden Flanschteile der Außenhülsen pressend umfaßt wird. Außerdem erfordert dieser Aufbau eine spezielle Zentrierbuchse mit einem Bund auf der Außenseite zum Einpressen zwischen die zwei flanschartigen Teile der Außenzentrierung.

Der Erfindung liegt die Aufgabe zugrunde, bei einer Lichtwellenleiter-Steckverbindung der eingangs genannten Art in möglichst einfacher Weise eine Führungssicherung für die einzuführenden Steckerstifte zu erreichen und dabei gleichzeitig von einer Bauform der Schutz- und Befestigungshülse auszugehen, die möglichst universell verwendbar ist und sowohl für direkte Verbindung zweier flexibler Kabel untereinander als auch für Einschub-Gestellverbindungen und weitere Kombinationen herangezogen werden kann.

Diese Aufgabe wird bei einer Lichtwellenleiter-Steckverbindung der eingangs genannten Art gemäß der Erfindung dadurch gelöst, daß auf das an der einteilig ausgebildeten Schutz- und Befestigungshülse für die Überwurfmutter des Steckers vorgesehene Außengewinde eine Trichterhülse aufgeschraubt ist und daß die Trichterhülse auf eine Seite der Führungsbuchse aufgeschraubt ist und sich außerhalb und entlang der Führungsbuchse bis zur gegenüberliegenden Seite erstreckt.

Hieraus resultiert, wie auch aus der Beschreibung hervorgeht, insbesondere der Vorteil der universellen Verwendbarkeit der Befestigungs- und Schutzhülse 12 bzw. 19, daß auf ihre beidseits gleichen und gegebenenfalls durchgehenden Gewinde 12a nicht nur die Überwurfmuttern 14 der Handstecker sondern auch noch zusätzlich Befestigungsteile 11 bzw. 18 für den Gestelleinbau aufschraubbar sind. Zusätzlich können jederzeit auf die beiden Seiten wahlweise Meßstecker oder anderweitige Verbindungsstecker aufgeschraubt werden.

Weitere vorteilhafte Ausbildungen des Erfindungsgegenstandes finden sich in den Unteransprüchen.

Nachstehend wird die Erfindung samt ihren Vorteilen, anhand von in den Figuren gezeigten Ausführunsbeispielen näher erläutert.

Die Figuren zeigen im einzelnen:

Figur 1 eine Übersicht über die Anwendung der Steckverbindung entweder zur Direktverbindung zweier Lichtwellenleiter Kabel (unten) oder eine Gestellverbindung (oben),

Figur 2 ein Ausführungsbeispiel für den Stecker,

Figur 3 ein Ausführungsbeispiel für die Führingsbichse mit Haltering im Gestell oder Einschub,

Figur 4 ein Ausführungsbeispiel für den Stecker mit Befestigungsmitteln im Geteil oder Einschub,

Figur 5 ein bevorzugtes Ausführungsbeispiel für den Einbau in Gestelle oder Einschübe,

Figur 6 eine Kombinationsübersicht verschiedener Kupplungen und Stecker.

Prinzipiell beruht der Aufbau der Steckverbindung auf der Verwendung einer für zwei Lichtwellenleiter-Stecker 1 gemeinsamen Führungsbuchse 10. Die Stecker 1 sind dabei in bekannter Weise derart ausgeführt, daß das Ende eines Lichtwellenleiter-Kabels 20 mit seiner Faser in einer Kapillare eines Metallstückes 1 eingezogen ist, wobei die Front der Faser und des Metallstückes 1 gemeinsam plan geschliffen sind.

Diese Steckerstifte 1 sind in beide Enden der Führungsbuchse 10 soweit einschiebbar, daß sie plan aufeinanderstoßen. Die Führungsbuchse ist ein sehr genau bearbeitetes Metallteil, vorzugsweise aus Hartmetall und prinzipiell für alle Anwendungsfälle gleich.

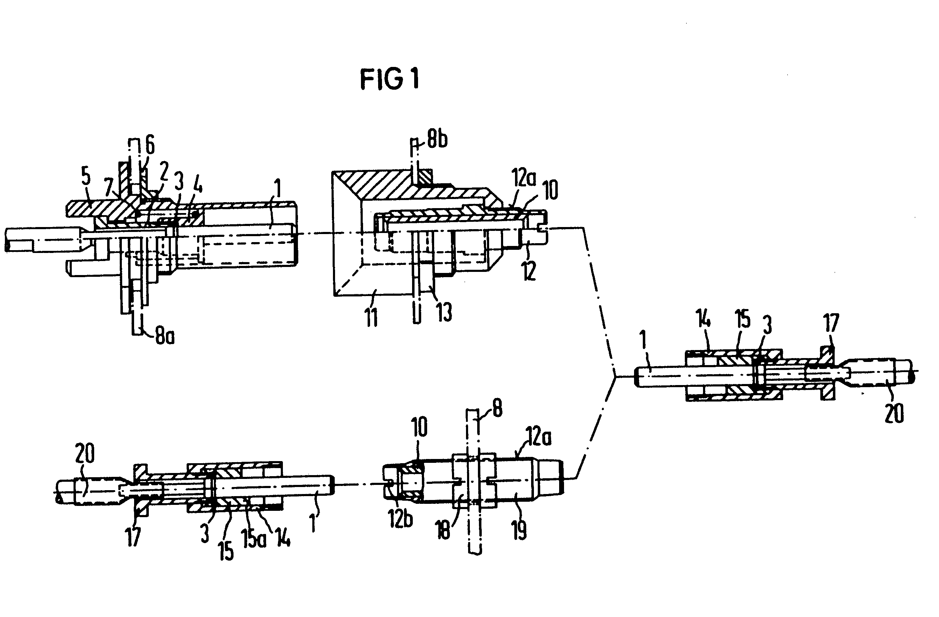

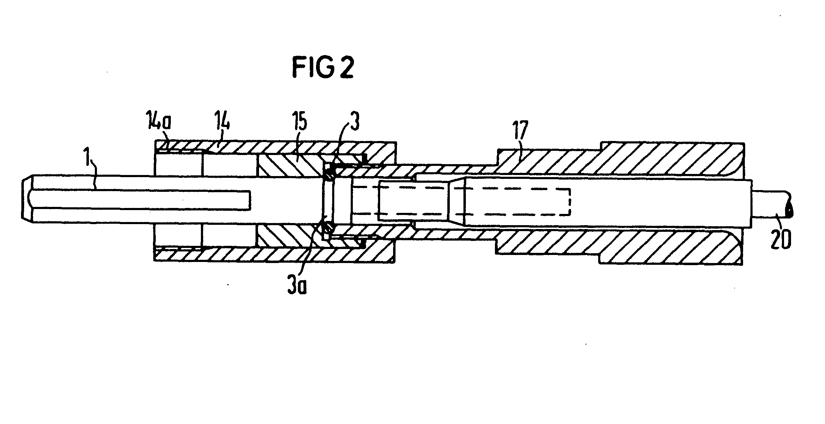

Diese Führungsbuchse 10 ist nun, wie in der Figur 1 oben gezeigt, mit Elementen 11, 12, 13 für den Einbau in eine Gestell- oder Einschubwand 8 ausgebildet. Der Stecker kann hierzu als beweglicher Handstecker, wie rechts und links unten in der Figur 1 dargestellt, und in der Figur 2 einzeln gezeigt ist, ausgebildet sein oder als Einbauform, wie links oben in der Figur 1 dargestellt.

Der untere Teil der Figur 1 zeigt eine Direktverbindung zweier Handstecker, wobei die Buchse entweder lose oder, wie strichliert durch 8 angedeutet, in einer Gestell- oder Einschubwand befestigt sein kann. Daher sitzt die Führungsbuchse 10 vorzugsweise durch Verkleben in einer Schutzhülse 19 die neutral ausgebildet mit Außengewinden 12a versehen ist, auf die Überwurfmuttern 14 der beiden Handstecker aufschraubbar sind. Auf dasselbe Gewinde können auch Ringmuttern 18 für die Befestigung in einer Zwischenwand 8 zusätzlich aufgeschraubt werden. Die Einzelheiten gehen besser aus den weiteren Figuren hervor.

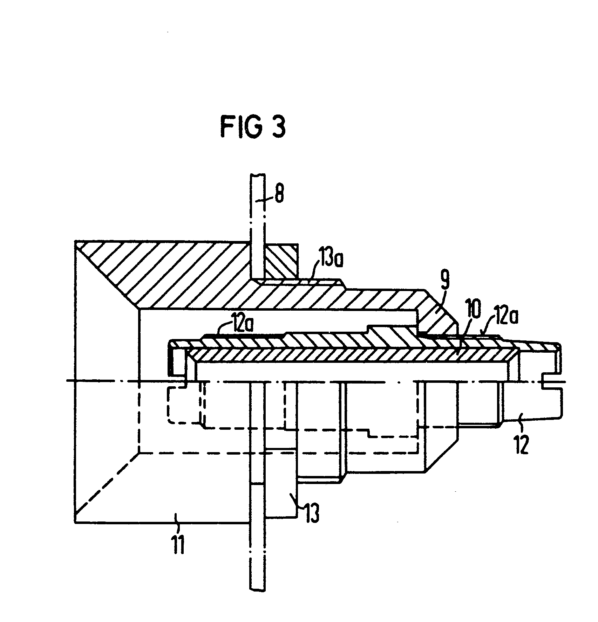

In der Figur 3 ist der Einbau der Führungsbuchse 10 in einer Gestell- oder Einschubwand 8 dargestellt. Auch zu diesem Zweck ist die Führungsbuchse 10 zunächst in eine Befestigungs- und Schutzhülse 12 die der Schutzhülse 19 im unteren Teil der Fig. 2 entspricht, eingeklebt. Die Verklebung findet mittels eines geeigneten Kapillarklebers statt und die Innenwand der Befestigungshülse 12 und die Außenfläche der Führungshülse sind so aufeinander abgestimmt, daß keine Beanspruching der präzise gearbeiteten Führungshülse beim Einbringen in die Befestigungshülse 12 erfolgt.

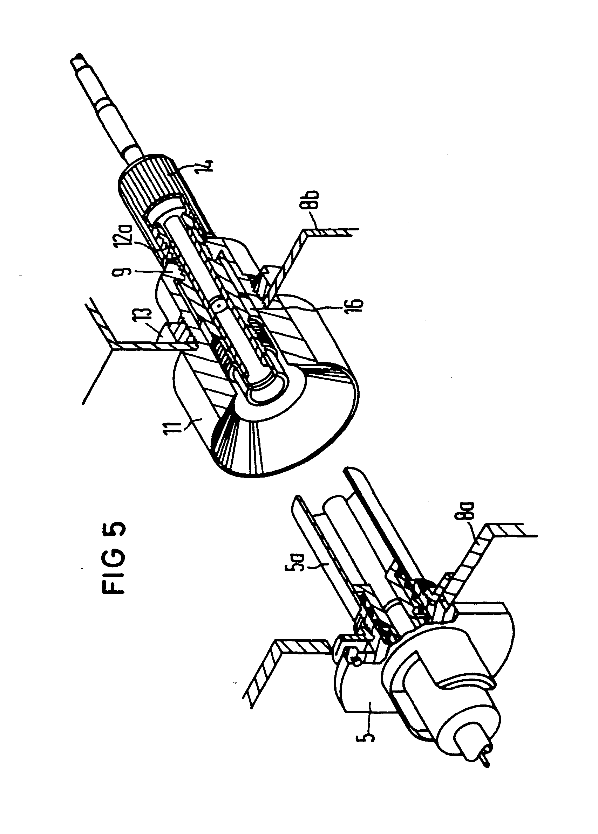

Die Befestigungshülse 12 trägt ein Außengewinde 12a, das in eine Trichterhülse 11 eingeschraubt ist. Zu diesem Zweck hat die Trichterhülse einen Ansatz 9 mit einem Gewinde. Die Trichterhülse selbst ist mit der Wand 8 eines Einschubs oder eines Gestells mittels einer Ringmutter 13 verschraubt. Hierzu hat die Trichterhülse auf der Außenkontur ein Gewinde 13a. Die Trichterhülse dient zur Vorzentrierung von Stecker 1 auf Buchse 10, wie in der Figur 1 oben links und auch in Figur 5 dargestellt. Diese Vorzentrierung ist besonders dann erforderlich, wenn die beiden Lichtwellenleiter-Stecker fest, zum Beispiel in einer Gestellwand 8a in Figur 5 bzw. einer Einschubwand 8b in Figur 5, angeordnet sind.

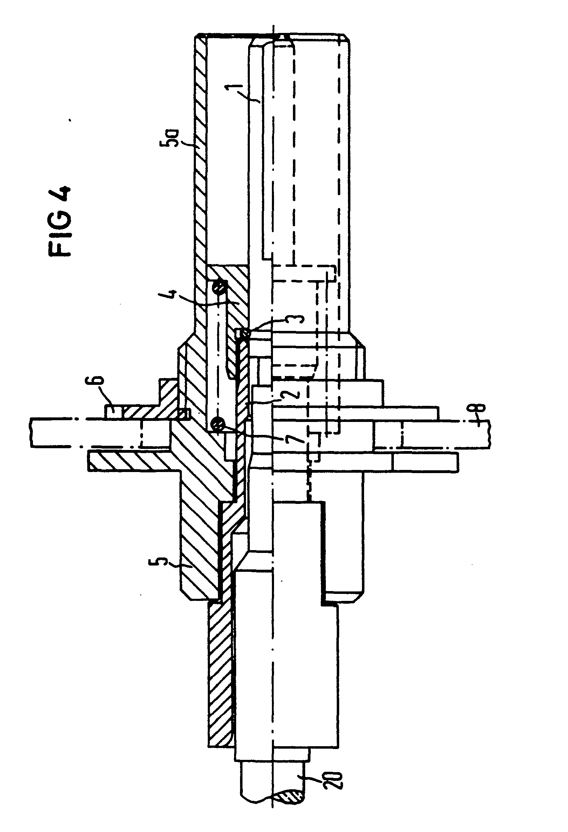

Ein hierfür geeigneter Stecker ist in Figur 4 in Einzelheit dargestellt. Der Stecker 1 bildet das Ende eines flexiblen Lichtwellenleiters 20. Der Stecker sitzt dabei in einer Steckerhülse 2, die frontseitig ein Außengewinde hat, über die eine Überwurfhülse 4 über einen Federring 3 aufgeschraubt ist. Die Teile 2, 1 und 4 sind dann zumindest über den Federring 3 verpreßt und fixiert. Die Steckerhülse 2 sitzt axial mittels Feder 7 beweglich in einer Befestigungshülse 5 für den Gestell- bzw. Einschubeinbau. Dazu hat sie außenseitig eine Verschraubung mittels Ringmutter 6 gegen die Zwischenwand 8. In der Befestigungshülse 5, die als Schutzhülse 5a zur Frontseite hin sich über die gesamte Länge des Steckerstiftes 1 erstreckt, liegt eine Feder 7, die sich gegen einen Kragen der Überwurfhülse 4 abstützt und damit den gesamten Stekker axial gegen die Befestigungshülse 5 verspannt. Treffen in gestrecktem Zustand die Frontenden zweier Stecker 1 aufeinander, so kann der in Figur 4 gezeigte Stecker 1 axiale Toleranzen ausgleichen. Die Schitzhülse 5a gleitet gemäß Figur 5 beim Stecken in den Trichter der Trichterhülse 11 zentrierend ein und führt über die gesamte Außenflächen 16 des Elementes 12 hinweg, während inzwischen der federnde Stecker 1 (gemäß Figur 4) plan auf den Stecker 1 des Gegensteckers nach Figur 1 rechts auftrifft.

Eine Ausführungsform des schon erwähnten Handsteckers ist in der Figur 2 im einzelnen dargestellt. Der Stift 1 bildet dabei wieder den eigentlichen Stecker und das Ende des Lichtwellenleiters 20. Zur Halterung des Steckers 1 ist eine Steckerhülse 17 vorgesehen, durch die das Lichtwellenleiter-Kabel 20 hindurchgeführt ist.

Eine Befestigungshülse 15 ist über den Stecker geschoben und unter Zwischenlage eines Federringes 3 auf ein Außengewinde der Steckerhülse 17 aufgeschraubt. Dadurch wird der Stecker festgehalten. Der Federring sitzt dabei in einer Ringnut 3a. Vor dem Aufbringen der Befestigungshülse 15 ist über das Frontende der Steckerhülse 17 eine lange Überwurfhülse 14 gesteckt. Wird der Stecker wie in Figur 1 angedeutet, in die Führungsbuchse 10 eingeführt, so kann anschließend diese Überwurfhülse 14 mittels ihres Innengewindes 14a auf das Außengewinde 12a entweder der Befestigungshülse 12 oder 19 aufgeschraubt werden, um eine feste Arretierung zu erhalten.

Für den Handstecker kann wahlweise auch eine Verdrehsicherung, bestehend aus einer Nase 15a am Teil 15 in der Figur 1 links unten, vorgesehen werden, die in eine nutförmige Aussparung 12b der Hülsen 12 oder 19 eingreift.

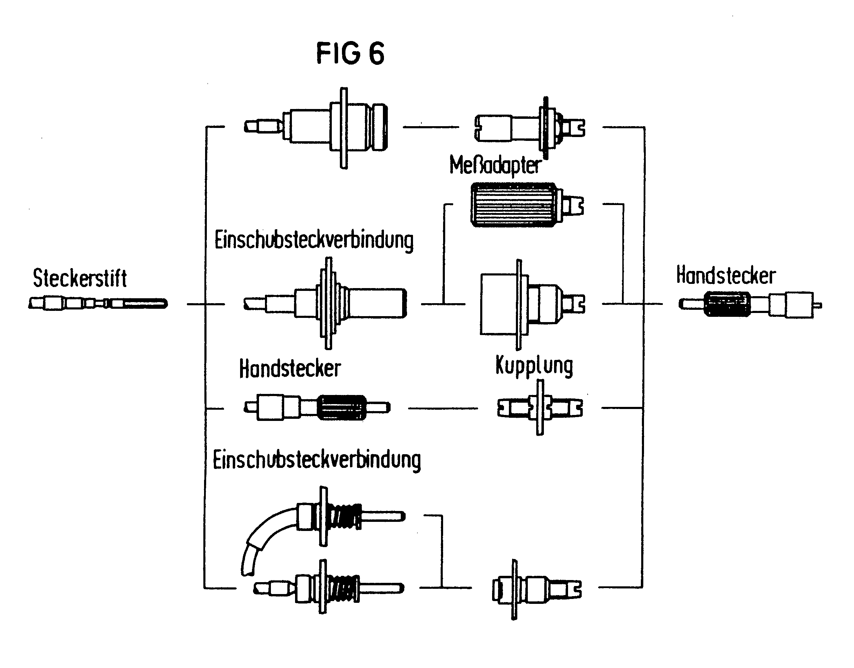

Es ist auf diese Weise in vorteilhaft einfacher Form eine weitgehend auf gleiche Ausgangsteile basierende Familie von Steckverbindungen geschaffen. Beispiele hierfür sind in der Figur 6 gezeigt. Die Außendurchmesser der Teile 5, 11, 19 können so gewählt werden, daß sie anstelle von Koaxialverbindungen in den gleichen Durchbrüchen in Gestellen bzw. Einschüben befestigt werden können.

Durch Variieren der Teile im die Hartmetallstifte und buchse ist es so möglich, für jeden Anwendungsfall einen optimal gestalteten und funktionsgerechten Steckverbinder zu schaffen. Der Stecker mit Schraubverbindung ist wahlweise mit oder ohne Drehsicherung konzipiert. Somit lassen sich sämtliche Anforderungen der genormten Bauweisen mit dieser Steckverbinderfamilie erfüllen.

## Patentansprüche

1. Lichtwellenleiter-Steckverbindung mit einem Stecker, bei dem das Ende der Lichtwellenleiter-Faser jeweils in einer Kapillare eines Metallsteckerstiftes (1) fixiert ist, dessen Frontseite plan mit der Lichtwellenleiter-Faser endet, wobei eine sowohl für den Einbau z.B. in eine Gestell- oder Einschubwand (8, 8b) als auch als Direktverbindung verwendbare Schutz- und Befestigungshülse (12, 19) vorgesehen ist, die eine Führungsbuchse (10) aufweist, deren genau bearbeitete Innenflächen dem Außendurchmesser der von beiden Seiten in die Hülse (10) einsteckbaren Stecker entspricht und die am Außenumfang beiderseits mit einem Gewinde (12a) zur Befestigung der mit Überwurfmuttern (14) versehenen Stecker ausgestattet ist, dadurch gekennzeichnet, daß auf das an der einteilig ausgebildeten Schutz- und Befestigungshülse (12/19) für die Überwurfmutter (14) des Steckers vorgesehene Außengewinde (12a) eine Trichterhülse (11) aufgeschraubt ist und daß die Trichterhülse auf eine Seite der Führungsbuchse (10) aufgeschraubt ist und sich außerhalb und entlang der Führungsbuchse bis zur gegenüberliegenden Seite erstreckt.

2. Lichtwellenleiter-Steckverbindung nach Anspruch 1, dadurch gekennzeichnet, daß die Trichterhülse (11) auf ihrer Außenkontur mittels eines Gewindes (13a) und einer Ringmutter (13) an einer Gestell- oder Einschubwand (8b) befestigbar ist (Fig. 1, Fig. 3).

3. Lichtwellenleiter-Steckverbindung nach Anspruch 1 oder 2, dadurch gekennzeichnet, daß die Trichterhülse (11) mittels eines mit einem Gewinde versehenen Ansatzes (9) auf die Schutz- und Befestigungshülse (12) aufgeschraubt ist.

4. Lichtwellenleiter-Steckverbindung nach einem der vorhergehenden Ansprüche, dadurch gekennzeichnet, daß die Trichterhülse (11) als Vorzentrierung für den einzuführenden Stecker dient.

5. Lichtwellenleiter-Steckverbindung nach einem der vorhergehenden Ansprüche, dadurch gekennzeichnet, daß der Stecker an einer Wand (8) befestigt ist (Fig. 4).

6. Lichtwellenleiter-Steckverbindung nach Anspruch 5, dadurch gekennzeichnet, daß die Schutz- und Befestigungshülse (12) eine Außenfläche (16) aufweist, über die eine Schutzhülse (5a) des Steckers geführt ist. (Fig. 1, Fig. 4, Fig. 5)

7. Lichtwellenleiter-Steckverbindung nach einem der Ansprüche 5 oder 6, dadurch gekennzeichnet, daß der andere der in die Führungsbuchse einzuschiebenden Stekker (Fig. 4), der ebenfalls mit dem Lichtwellenleiter-Kabel (20) verbunden ist, axial federnd in den ihn koaxial umgebenden Stekkerteilen für die kraftschlüssige Verbindung mit den Elementen der Führungsbuchse (10) angeordnet ist.

8. Lichtwellenleiter-Steckverbindung nach einem der vorhergehenden Ansprüche, dadurch gekennzeichnet, daß der Stecker (1) als Handstekker ausgebildet in einer Stekkerhülse (17) gefaßt ist, die mit einer unverlierbaren Überwurfmutter (14) versehen ist, deren Gewindeteil (14a) auf das Außengewindeteil (12a) der Schutz- und Befestigungshülse (12, 19) aufschraubbar ist (Figur 2).

9. Lichtwellenleiter-Steckverbindung nach einem der vorhergehenden Ansprüche, dadurch gekennzeichnet, daß der Stecker mit einer als Verdrehungssicherung dienenden Nase (15a) versehen ist, die in eine nutförmige Aussparung (12b) der Schutz- und Befestigungshülse (12, 19) eingreift (Fig. 1).

10. Lichtwellenleiter-Steckverbindung nach einem der vorhergehenden Ansprüche, dadurch gekennzeichnet, daß jeder Steckerstift (1) eine Ringnut (3a) aufweist, daß in dieser Rignnut (3a) ein Federring (3) sitzt und daß der Federring (3) zwischen einer auf den Steckerstift (1) aufschiebbaren, mit einem Außengewinde versehenen Steckerhülse (2, 17) und einer mit dem Außengewinde der Steckerhülse (2, 17) verschraubbaren, ebenfalls auf den Steckerstift (1) aufschiebbar ausgebildeten Befestigungs- oder Überwurfhülse (4, 15) eingepreßt ist.

## Revendications

1. Connecteur pour guides d'ondes optiques comportant une fiche, dans laquelle l'extrémité de la fibre formant guide d'ondes optiques est fixée respectivement dans un capillaire d'une broche (1) de la fiche métallique, dont la face frontale se termine dans le même plan que la fibre formant guide d'ondes optiques, et dans lequel il est prévu des douilles de protection et de fixation (12, 19), qui peuvent être utilisées aussi bien pour leur insertion dans une paroi (8, 8b) d'une baie ou d'un tiroir que comme liaison directe, et possèdent un manchon de guidage (10), dont les surfaces intérieures usinées de façon précise correspondent au diamètre extérieur des fiches pouvant être insérées des deux côtés dans le manchon (10) et qui est pourvu des deux côtés, sur son pourtour extérieur, d'un filetage (12a) permettant la fixation des fiches comportant des écrous d'accouplement (14), caractérisé par le fait qu'un manchon à entonnoir (11) est vissé sur le filetage extérieur (12a) prévu sur la douille de protection et de fixation (12/19), réalisée d'un seul tenant, pour l'écrou d'accouplement (14) de la fiche et que le manchon à entonnoir est vissé sur un côté du manchon de guidage (10) et s'étend à l'extérieur et le long du manchon de guidage jusqu'au côté opposé.

2. Connecteur pour guides d'ondes optiques suivant la revendication 1, caractérisé par le fait que le manchon formant entonnoir (11) peut être fixé au niveau de son pourtour extérieur à l'aide d'un filetage (13a) et d'un écrou à anneau (13), sur une paroi (8b) d'une baie ou d'un tiroir (figure 1, figure 3).

3. Connecteur pour guides d'ondes optiques suivant la revendication 1 ou 2, caractérisé par le fait que le manchon à entonnoir (11) peut être vissé sur la douille de protection et de fixation (12), au moyen d'un embout (9) muni d'un filetage.

4. Connecteur pour guides d'ondes optiques suivant l'une des revendications précédentes, caractérisé par le fait que le manchon à entonnoir est utilisé comme système de centrage préalable pour la fiche devant être insérée.

5. Connecteur pour guides d'ondes optiques suivant l'une des revendications précédentes, caractérisé par le fait que la fiche est fixée sur une paroi (8) (figure 4).

6. Connecteur pour guides d'ondes optiques suivant la revendication 5, caractérisé par le fait que la douille de protection et de fixation (12) possède une surface extérieure (16), sur laquelle est guidé un manchon de protection (5a) de la fiche (figure 1, figure 4, figure 5).

7. Connecteur pour guides d'ondes optiques suivant l'une des revendications 5 ou 6, caractérisé par le fait que l'autre des fiches (figure 4), qui doit être insérée dans le manchon de guidage et est également reliée au câble (20) du guide d'ondes optiques, est disposée, d'une manière élastique dans la direction axiale, dans les parties de la fiche qui l'entourent coaxialement, pour la liaison de force avec les éléments du manchon de guidage (10).

8. Connecteur pour guides d'ondes optiques suivant l'une des revendications précédentes, caractérisé par le fait que la fiche (1) réalisée sous la forme d'une fiche manuelle est insérée dans une douille (17), qui comporte un écrou d'accouplement imperdable (14), dont la partie filetée (14a) peut être vissée sur la partie (12a) du filetage extérieur de la douille de protection et de fixation (12, 19) (figure 2).

9. Connecteur pour guides d'ondes optiques suivant l'une des revendications précédentes, caractérisé par le fait que la fiche comporte un bec (15a), qui sert de dispositif de blocage en rotation et s'engage dans un évidement en forme de gorge (12b) de la douille de protection et de fixation (12, 19) (figure 1).

10. Connecteur pour guides d'ondes optiques suivant l'une des revendications précédentes, caractérisé par le fait que chaque broche (1) de la fiche comporte une gorge annulaire (3a), dans laquelle est logée une rondelle-ressort (3), et que la rondelle-ressort (3) est insérée à force entre une douille (2, 17) de la fiche, qui peut être vissée sur la broche (1) de la fiche et comporte un filetage extérieur, et une douille de fixation ou d'accouplement (4, 15), qui peut être vissée sur le filetage extérieur de la douille (2, 17) de la fiche et est agencée de manière à pouvoir être également emmanchée sur la broche (1) de la fiche.

**Claims**

1. Optical waveguide plug-type connector having a plug, in which the end of the optical waveguide fibre is in each case fixed in a capillary of a metal connector pin (1), the front side of which ends plane with the optical waveguide fibre, a protective and securing sleeve (12, 19) being provided which can be used for installation, e.g. in a rack or plug-in wall (8, 8b) and as a direct connection, which securing sleeve has a guide bushing (10) the exactly finished inner surfaces of which correspond to the outer diameter of the plugs which can be plugged into the sleeve (10) from both sides and which guide bushing is equipped on the outer circumference on both sides with a thread (12a) for securing the plugs provided with coupling rings (14), characterized in that a funnel sleeve (11) is screwed onto the outer thread (12a) which is provided on the integrally constructed protective and securing sleeve (12/ 19) for the coupling ring (14) of the plug and in that the funnel sleeve is screwed onto one side of the guide bushing (10) and extends outside and along the guide bushing up to the opposite side.

2. Optical waveguide plug-type connector according to Claim 1, characterized in that the funnel sleeve (11) can be secured on its outer contour by means of a thread (13a) and an annular nut (13) to a rack or plug-in wall (8b). (Figure 1, Figure 3).

3. Optical waveguide plug-type connector according to Claim 1 or 2, characterized in that the funnel sleeve (11) can be screwed onto the protective and securing sleeve (12) by means of an extension piece (9) provided with a thread.

4. Optical waveguide plug-type connector according to one of the preceding claims, characterized in that the funnel sleeve (11) serves as a precentring element for the plug to be introduced.

5. Optical waveguide plug-type connector according to one of the preceding claims, characterized in that the plug is secured on a wall (8). (Figure 4).

6. Optical waveguide plug-type connector according to Claim 5, characterized in that the protective and securing sleeve (12) has an outer surface (16), over which a protective sleeve (5a) of the plug is guided. (Figure 1, Figure 4, Figure 5).

7. Optical waveguide plug-type connector according to one of Claims 5 or 6, characterized in that the other plug (Figure 4) which is to be inserted into the guide bush, which plug is also connected to the optical waveguide cable (20) is axially resiliently arranged in the plug parts surrounding it coaxially for frictional connection with the elements of the guide bushing (10).

8. Optical waveguide plug-type connector according to one of the preceding claims, characterized in that the plug (1) is designed as a hand plug mounted in a plug sleeve (17) which is provided with a captive coupling ring (14), the thread part (14a) of which can be screwed onto the outer thread part (12a) of the protective and securing sleeve (12, 19). (Figure 2).

9. Optical waveguide plug-type connector according to one of the preceding claims, characterized in that the plug is provided with a projection (15a) serving as an anti-twisting device which engages in a groove-shaped recess (12b) of the protective and securing sleeve (12, 19). (Figure 1).

10. Optical waveguide plug-type connector according to one of the preceding claims, characterized in that each connector pin (1) has an annular groove (3a), in that a spring washer (3) sits in this annular groove (3a) and in that the spring washer (3a) is pressed between a plug sleeve (2, 17) which can be pushed on to the connector pin (1) and is provided with an outer thread and a securing or coupling sleeve (4, 15) which can be screwed to the outer thread of the connector sleeve (2, 17) and is likewise constructed to be pushed onto the connector pin (1)

FIG 1

FIG 2

# FIG 3

FIG 4

FIG 5

FIG 6

Steckerstift

Einschubsteckverbindung

Meßadapter

Handstecker

Handstecker

Kupplung

Einschubsteckverbindung

EP 0 164 531 B1